# EUROPÄISCHE PATENTSCHRIFT

(11) **EP 3 825 289 B1**
(45) Veröffentlichungstag und Bekanntmachung des Hinweises auf die Patenterteilung: **29.05.2024**
(21) Anmeldenummer: 20208477.8
(22) Anmeldetag: 18.11.2020
(51) Int. Cl.: C03C 17/36, E06B 5/16

(54) **BRANDSCHUTZGLAS MIT TEMPERATURSTABILER BESCHICHTUNG**
FIRE RESISTANT GLASS WITH TEMPERATURE STABLE COATING
VERRE IGNIFUGE POURVU DE REVÊTEMENT STABLE À LA TEMPÉRATURE

(30) Priorität: 20.11.2019 DE 102019131378
(43) Veröffentlichungstag der Anmeldung: 26.05.2021
(73) Patentinhaber: SCHOTT AG, 55122 Mainz (DE)
(72) Erfinder: Panzner, Gerrit, 07407 Rudolstadt (DE); Alkemper, Jochen, 55270 Klein-Winternheim (DE); Lange, Arne, 31073 Grünenplan (DE); Jördens, Thomas, 31073 Grünenplan (DE); Krzyzak, Marta, 37581 Bad Gandersheim (DE)
(74) Vertreter: Fuchs Patentanwälte Partnerschaft mbB

(56) Entgegenhaltungen:
- EP-A1- 1 742 889
- EP-A1- 2 958 872
- WO-A1-2016/184732
- FR-A1- 2 727 107
- US-A- 6 068 914
- US-A1- 2016 214 887

## Beschreibung

Die vorliegende Erfindung betrifft ein Brandschutzglas, insbesondere ein monolithisches Brandschutzglas, mit temperaturstabiler Beschichtung sowie ein Verfahren zu dessen Herstellung. Die Erfindung betrifft auch die Verwendung des Brandschutzglases. Das Brandschutzglas der Erfindung umfasst einen Schichtverbund, der ein Glassubstrat, mindestens eine auf dem Glassubstrat abgeschiedene IR-reflektierende Schicht und jeweils eine auf der mindestens einen IR-reflektierenden Schicht abgeschiedene Schutzschicht umfasst.

EW ist eine Feuerwiderstandsklasse nach DIN EN 13501- 02: 2007 und betrifft den Raumabschluss gegenüber Feuer, heißen Gasen und Rauch, plus reduzierten Durchgang der Wärmestrahlung. Die Zahl nach der Buchstabenkombination gibt die Mindestdauer des Widerstands in Minuten an. EW60 bezeichnet also beispielsweise einen Raumabschluss mit Strahlungsbegrenzung im Brandfall von mindestens 60 Minuten.

Monolithische Brandschutzgläser mit hoher IR-Reflexion für EW-Anwendungen sind zum Beispiel aus der US 2016/214887 bekannt.

Diese basieren entweder auf weichen Sputterschichten oder online aufgebrachten Hardcoatings. Man findet sie hauptsächlich in Anwendungen bis zur Widerstandsklasse EW60. Längere Standzeiten werden nicht erreicht, da die Beschichtung infolge Temperatureinwirkung im Verlauf des Brandversuchs degradiert und ihre Funktionalität einbüßt.

Es ist daher eine Aufgabe diese Nachteile aus dem Stand der Technik zu überwinden und ein Brandschutzglas, insbesondere ein monolithisches Brandschutzglas, mit verbesserter EW-Standzeit zur Verfügung zu stellen. Die Aufgabe wird durch die Gegenstände der Patentansprüche gelöst.

Die Aufgabe wird insbesondere gelöst durch ein Brandschutzglas umfassend einen Schichtverbund, der mindestens ein Glassubstrat, mindestens eine auf dem Glassubstrat abgeschiedene IR-reflektierende Schicht und jeweils mindestens eine auf der mindestens einen IR-reflektierenden Schicht abgeschiedene Schutzschicht umfasst, wobei mit dem Brandschutzglas nach DIN EN 13501- 02: 2007 eine Feuerwiderstandsklasse von mehr als EW60 erreicht wird und wobei jede der beiden Seiten des Brandschutzglases eine Fläche in einem Bereich von 0,0625 m² bis 10 m², bevorzugt von 0,25 m² bis 8 m², weiter bevorzugt von 1 m² bis 5 m², weiter bevorzugt von 1,2 m² bis 2 m² aufweist. Die Fläche kann insbesondere wenigstens 0,25 m², wenigstens 0,7 m², wenigstens 1 m², wenigstens 1,2 m², wenigstens 2,0 m², wenigstens 2,5 m² oder wenigstens 3,0 m² betragen. In einer Ausführungsform beträgt die Fläche höchstens 10 m², höchstens 8 m² oder höchstens 5 m².

Bevorzugt besteht das Brandschutzglas aus dem Schichtverbund. Bevorzugt besteht der Schichtverbund aus dem mindestens einen Glassubstrat, der mindestens einen auf dem Glassubstrat abgeschiedenen IR-reflektierenden Schicht und der jeweils mindestens einen auf der mindestens einen IR-reflektierenden Schicht abgeschiedenen Schutzschicht. Die Schutzschicht kann erfindungsgemäß auch als Cover-Schicht bezeichnet werden.

Bevorzugt umfasst der Schichtverbund genau ein Glassubstrat. Bevorzugt umfasst der Schichtverbund jeweils genau eine auf der mindestens einen IR-reflektierenden Schicht abgeschiedene Schutzschicht, in anderen Worten also bevorzugt genau eine Schutzschicht auf jeder IR-reflektierenden Schicht.

Bevorzugt besteht der Schichtverbund aus dem Glassubstrat, genau einer auf dem Glassubstrat abgeschiedene IR-reflektierenden Schicht und genau einer auf der IR-reflektierenden Schicht abgeschiedenen Schutzschicht. Alternativ und ebenfalls bevorzugt besteht der Schichtverbund aus dem Glassubstrat, genau einer auf dem Glassubstrat abgeschiedenen IR-reflektierenden Schicht, genau einer auf der IR-reflektierenden Schicht abgeschiedenen Schutzschicht und genau einer auf der der IR-reflektierenden Schicht gegenüberliegenden Seite des Glassubstrats abgeschiedenen Schutzschicht. Alternativ und ebenfalls bevorzugt besteht der Schichtverbund aus dem Glassubstrat, genau zwei auf gegenüberliegenden Seiten des Glassubstrats abgeschiedenen IR-reflektierenden Schichten und genau zwei Schutzschichten, wobei jeweils eine Schutzschicht auf jeder der beiden IR-reflektierenden Schichten abgeschieden ist.

Das Brandschutzglas der vorliegenden Erfindung weist bevorzugt eine geringe Gesamtdicke auf. Dies ist insbesondere mit einer vorteilhaften Gewichtsersparnis verbunden. Bevorzugt liegt die Gesamtdicke des Brandschutzglases in einem Bereich von 1 mm bis 20 mm, insbesondere in einem Bereich von 3 bis 15 mm, von 4 bis 12 mm, von 4,5 mm bis 9 mm oder 5 mm bis 8 mm.

Das Brandschutzglas der vorliegenden Erfindung ist bevorzugt ein monolithisches Brandschutzglas. Die Brandschutzeigenschaften ergeben sich also bevorzugt nicht aus IR-reflektierenden Schichten, die in den Scheibenzwischenraum (SZR) zwischen zwei Glasscheiben eingebracht sind. Stattdessen wird bevorzugt nur ein Glassubstrat mit mindestens einer darauf abgeschiedenen IR-reflektierende Schicht eingesetzt. Dadurch weist das monolithische Brandschutzglas der Erfindung im Vergleich zu nicht-monolithischem Brandschutzglas eine verringerte Gesamtdicke auf. Dies ist insbesondere hinsichtlich des Gewichts des Glases und auch hinsichtlich der Transmissionseigenschaften vorteilhaft.

Das Glassubstrat der vorliegenden Erfindung ist bevorzugt ausgewählt aus der Gruppe bestehend aus Borosilikatglas, Kalk-Natron-Glas, Aluminosilikatglas und Lithium-Aluminosilikatglas. Das Glassubstrat der vorliegenden Erfindung umfasst bevorzugt ein Borosilikatglas. Weiter bevorzugt ist das Glassubstrat ein Borosilikatglas. Das Glassubstrat der vorliegenden Erfindung kann ein Glas oder eine Glaskeramik umfassen oder daraus bestehen. Bevorzugt ist das Glassubstrat der Erfindung jedoch keine Glaskeramik, sondern ein Glas.

Der "thermische Ausdehnungskoeffizient" oder "CTE" ist der mittlere lineare thermische Ausdehnungskoeffizient in einem Temperaturbereich von 20°C bis 300°C. Er wird bestimmt gemäß DIN ISO 7991:1987. In einer Ausführungsform weist das Glassubstrat einen thermischen Ausdehnungskoeffizienten (CTE) im Temperaturbereich von 20 bis 300°C von mindestens 2,0*10⁻⁶/K auf. Der CTE kann wenigstens 2,5*1⁻⁶ /K oder wenigstens 3,0*10⁻⁶ /K betragen. Es ist vorteilhaft, dass der erfindungsgemäße Schichtverbund auch mit Glassubstraten realisierbar ist, die einen CTE oberhalb der genannten Grenzen haben. Dadurch steht eine größere Bandbreite an Material zur Auswahl. Da das Glassubstrat sich unter Hitzeeinwirkung aber auch nicht zu sehr ausdehnen sollte, kann der CTE in einer Ausführungsform auf höchstens 7,0*10⁻⁶ /K oder höchstens 5,5*10⁻⁶ /K begrenzt sein. Optional kann der CTE aber auch geringer sein, beispielsweise von -1,5*10⁻⁶ /K bis 7,0*10⁻⁶ /K oder >1,0*10⁻⁶ /K oder >0,0 /K.

Der Schichtverbund umfasst mindestens eine auf dem Glassubstrat abgeschiedene IR-reflektierende Schicht. Der Schichtverbund kann genau eine auf dem Glassubstrat abgeschiedene IR-reflektierenden Schicht umfassen. Besonders bevorzugt umfasst der Schichtverbund genau zwei auf gegenüberliegenden Seiten des Glassubstrats abgeschiedene IR-reflektierende Schichten.

Die IR-reflektierende Schicht ist insbesondere eine low-e Schicht. Die Ausdrücke "low-e", "lowE" und "low-E" werden in der vorliegenden Beschreibung synonym verwendet. LowE steht für "niedrige Emission" und bezeichnet im Zusammenhang mit der vorliegenden Erfindung insbesondere eine geringe thermische Emission, wobei eine geringe thermische Emission von der Feuerseite zur feuerabgewandten Seite besonders bevorzugt ist. Die IR-reflektierenden low-e Schichten weisen also eine geringe thermische Emission auf. Die IR-reflektierende Schicht ist eine silberhaltige Schicht, insbesondere eine Sputterschicht. Geeignete IR-reflektierende Schichten sind beispielsweise die kommerziell erhältlichen Beschichtungen N34HT oder A70HT der Firma arcon (arcon Flachglas-Veredlung GmbH & Co. KG, Industriestraße 10, 91555 Feuchtwangen, Deutschland).

Das Brandschutzglas der vorliegenden Erfindung weist eine verhältnismäßig hohe Transmission im Bereich des sichtbaren Lichts und eine verhältnismäßig geringe Transmission im IR-Bereich auf. Die geringe Transmission im IR-Bereich wird insbesondere durch die IR-reflektierende Schicht erreicht. Die IR-reflektierende Schicht ist bevorzugt so ausgestaltet, dass eine geringe Transmission im IR-Bereich erzielt wird. Bevorzugt beträgt die Transmission im gesamten Wellenlängenbereich von 400 nm bis 700 nm mindestens 30%, weiter bevorzugt mindestens 40%, weiter bevorzugt mindestens 50%. Bevorzugt beträgt die Transmission bei einer Wellenlänge von 1500 nm höchstens 25%, weiter bevorzugt höchstens 20%, weiter bevorzugt höchstens 15%. Weiter bevorzugt beträgt die Transmission im gesamten Wellenlängenbereich von 1450 nm bis 1600 nm höchstens 25%, weiter bevorzugt höchstens 20%, weiter bevorzugt höchstens 15%. Weiter bevorzugt beträgt die Transmission im gesamten Wellenlängenbereich von 1400 nm bis 1700 nm höchstens 25%, weiter bevorzugt höchstens 20%, weiter bevorzugt höchstens 15%. Weiter bevorzugt beträgt die Transmission im gesamten Wellenlängenbereich von 1350 nm bis 1800 nm höchstens 25%, weiter bevorzugt höchstens 20%, weiter bevorzugt höchstens 15%. Weiter bevorzugt beträgt die Transmission im gesamten Wellenlängenbereich von 1300 nm bis 1900 nm höchstens 25%, weiter bevorzugt höchstens 20%, weiter bevorzugt höchstens 15%. Weiter bevorzugt beträgt die Transmission im gesamten Wellenlängenbereich von 1250 nm bis 2000 nm höchstens 25%, weiter bevorzugt höchstens 20%, weiter bevorzugt höchstens 15%.

Bevorzugt beträgt das Verhältnis der Transmission bei einer Wellenlänge von 500 nm zur Transmission bei einer Wellenlänge von 1250 nm mindestens 1,5:1, weiter bevorzugt mindestens 1,75:1, weiter bevorzugt mindestens 2:1, weiter bevorzugt mindestens 2,25:1, weiter bevorzugt mindestens 2,5:1, weiter bevorzugt mindestens 2,75:1, weiter bevorzugt mindestens 3:1, weiter bevorzugt mindestens 3,25:1, weiter bevorzugt mindestens 3,5:1, weiter bevorzugt mindestens 3,75:1, weiter bevorzugt mindestens 4:1.

Die Schutzschicht der vorliegenden Erfindung schützt bevorzugt nicht nur gegen einen vorzeitigen Schichtabbau bzw. eine vorzeitige Zersetzung der IR-reflektierenden Schicht im Lastfall (Brand/Temperatureinwirkung), sondern auch im Gebrauchsfall gegen mechanische und/oder chemische Schädigung. Durch die Schutzschicht wird bevorzugt eine Degradation bis zu Temperaturen von 700°C vermieden. Bevorzugt hält der Schichtverbund Temperaturen bis 700°C ohne Degradation stand. Der Begriff "Degradation" beschreibt in diesem Zusammenhang eine Zersetzung oder zumindest Umbildung der Schicht, die mit einem Funktionsverlust bezüglich der IR-reflektierenden Eigenschaft einhergeht. Optisch lässt sich dies insbesondere als (opake) Eintrübung beobachten, die im heißesten Bereich der Scheibe beginnt und sich sukzessive ausbreitet.

Erfindungsgemäß ist auf jeder IR-reflektierenden Schicht eine Schutzschicht abgeschieden. Dadurch wird der Schutz der IR-reflektierenden Schicht(en) gewährleistet. In Ausführungsformen mit genau einer auf dem Glassubstrat abgeschiedenen IR-reflektierenden Schicht kann zusätzlich zur auf der IR-reflektierenden Schicht abgeschiedenen Schutzschicht eine auf der der IR-reflektierenden Schicht gegenüberliegenden Seite des Glassubstrats abgeschiedene Schutzschicht vorgesehen sein.

Bevorzugt ist die Schutzschicht eine Mischoxidschicht auf Basis von SiO₂ oder eine reine SiO₂-Schicht.

Die Schutzschicht der vorliegenden Erfindung umfasst bevorzugt ein Mischoxid, insbesondere ein Siliziummischoxid. Weiter bevorzugt besteht die Schutzschicht aus einem Mischoxid, insbesondere einem Siliziummischoxid. Insbesondere handelt es sich bevorzugt um eine Siliziummischoxid-Schicht, wobei die Zumischung bevorzugt ein Oxid zumindest eines der Elemente Aluminium, Zinn, Magnesium, Phosphor, Cer, Zirkon, Titan, Cäsium, Barium, Strontium, Niob, Zink, Bor und/oder ein Fluorid ist, wobei bevorzugt zumindest ein Oxid des Elements Aluminium enthalten ist. Bevorzugte Fluoride sind ausgewählt aus der Gruppe bestehend aus MgF₂, CaF₂, AlF₃, MgₓAlF_{y}, [K₁₋ₓNaₓ]MgF₃, SrF₂ ,BaF₂, KZnF₃, ZnF₂ und Kombinationen davon. Weiter bevorzugt kann es sich um eine reine Siliziumoxidschicht handeln. Unter Siliziumoxid im Sinne dieser Erfindung wird jedes Siliziumoxid zwischen Siliziummono- und Siliziumdioxid verstanden. Silizium im Sinne der Erfindung wird als Metall und als Halbmetall verstanden. Siliziummischoxid ist eine Mischung aus einem Siliziumoxid mit einem Mischungspartner, insbesondere mit einem Oxid und/oder Fluorid zumindest eines anderen Elementes, die homogen oder nicht homogen, stöchiometrisch oder nicht stöchiometrisch sein kann.

Das Molverhältnis des Elements des Mischungspartners zu Silizium im Mischoxid liegt bevorzugt zwischen etwa 3% bis etwa 30%, weiter bevorzugt zwischen etwa 5% und etwa 20%, besonders bevorzugt zwischen etwa 7% und etwa 12%. Dies gilt insbesondere für Silizium-Aluminium-Mischoxide. Im Falle einer Silizium-Aluminium-Mischoxidschicht liegt das Molverhältnis von Aluminium zu Silizium im Mischoxid bevorzugt zwischen etwa 3% bis etwa 30%, weiter bevorzugt zwischen etwa 5% und etwa 20%, besonders bevorzugt zwischen etwa 7% und etwa 12%.

Bevorzugt ist die Haftung der Schutzschicht an der IR-reflektierenden Schicht höher als die Haftung der IR-reflektierenden Schicht am Glassubstrat. Daraus ergibt sich eine besonders hohe Stabilität des Schichtverbundes und damit einhergehend eine besonders hohe Sicherheit. Die Haftung der low-e Schicht am Glassubstrat ist ohnehin bereits sehr hoch. Erfindungsgemäß kann überraschenderweise eine noch höhere Haftung der Schutzschicht an der IR-reflektierenden Schicht erzielt werden. Ob die Haftung der Schutzschicht an der IR-reflektierenden Schicht höher ist als die Haftung der IR-reflektierenden Schicht am Glassubstrat, kann beispielsweise mittels eines Scratchtests überprüft werden. Bevorzugt wird bei einem solchen Prüfverfahren eine Ritzspur erzeugt, indem ein Indenter (insbesondere Diamantkugel (R = 5 µm): Sphero-conical 5µm SC-A63) mit steigender Kraft (Fₙ) über die Oberfläche der zu prüfenden Probe gezogen wird. Die Prüfkraft ist bevorzugt progressiv von 0 bis 0,4 N. Die Lastrate beträgt bevorzugt 0,5 N/min. Die Geschwindigkeit ist bevorzugt 10 mm/min. Die Prüfeinrichtung ist bevorzugt der MCT MikroCombiTester von CSM MCT S/N 01-04488. Das Versagen der Schicht wird bevorzugt durch Betrachten der Ritzspur unter dem Mikroskop ermittelt. Zusatzinformationen, wie Kräfte und Eindringtiefen werden bevorzugt während des Scratchs gemessen und mit den Mikroskopbildern verglichen. Ausgewertet werden bevorzugt folgende kritische Kräfte (Critical Loads Lc): Lc1a und Lc1b. Bei Lc1a ist die oberste Schicht in der Indenterspur entfernt. Bei Lc1b sind beide Schichten in der Indenterspur entfernt. Wenn Lc1b größer ist als Lc1a, zeigt dies an, dass zuerst die Schutzschicht entfernt wurde, dass also die Haftung der Schutzschicht an der IR-reflektierenden Schicht nicht höher war als die Haftung der IR-reflektierenden Schicht am Glassubstrat. Wenn jedoch Lc1a und Lc1b gleich groß sind, zeigt dies an, dass Schutzschicht und IR-reflektierende Sicht gleichzeitig entfernt wurden, was wiederum zeigt, dass die Haftung der Schutzschicht an der IR-reflektierenden Schicht höher war als die Haftung der IR-reflektierenden Schicht am Glassubstrat. Bei einem Brandschutzglas der vorliegenden Erfindung sind also Lc1a und Lc1b bevorzugt gleich groß. Insbesondere ist Lc1a bevorzugt nicht kleiner als Lc1b.

Bevorzugt ist die E-Standzeit des Brandschutzglases bei feuerseitiger Anordnung der Schutzschicht im Vergleich zu einem identischen Brandschutzglas ohne Schutzschicht erhöht. Die Wärmereflexion vermindert die Aufheizung des Glassubstrats. Monolithische Scheiben versagen durch Verlust des Raumabschlusses (Glas rutscht aus dem Rahmen heraus). Je später das Glas weich und fließfähig wird, desto später das Versagen.

Bevorzugt ist der Schichtverbund vorspannbar oder vorgespannt, insbesondere thermisch vorspannbar oder thermisch vorgespannt. Bevorzugt liegt die Oberflächendruckspannung (englisch: "surface compressive stress (CS)") des Glassubstrats in einem Bereich von 100 bis 200 MPa, weiter bevorzugt in einem Bereich von 140 bis 170 MPa, weiter bevorzugt in einem Bereich von 150 bis 160 MPa. Die Druckspannung wird bevorzugt optisch bestimmt, insbesondere mit einem Spannungsmessgerät wie beispielsweise dem kommerziell erhältlichen FSM6000. Es ist vorteilhaft, wenn das Glassubstrat vorgespannt ist, da dann die infolge der Aufheizung entstehenden Spannungen besser aufgenommen werden können. Dies ist nicht der Fall, wenn das Glassubstrat eine Glaskeramik ist. Die Vorspannung des gesamten Schichtverbundes ist produktionsseitig vorteilhaft, da dadurch eine Bandmaßfertigung möglich wird. Insbesondere kann im Bandmaß beschichtet, anschließend zurechtgeschnitten und dann vorgespannt werden.

Durch das Vorspannen kann bevorzugt eine Kompaktierung der Schutzschicht erreicht werden. Die Kompaktierung wird bevorzugt indirekt bestimmt, insbesondere angelehnt an die Veränderungen, die bei den bekannten Schichtsystemen eintreten und durch eine Veränderung der Optik visuell erkennbar ist.

Bevorzugt liegt die Dicke des Substratglases in einem Bereich von 1 mm bis 10 mm, insbesondere 2 mm bis 9 mm, 3 mm bis 8 mm oder 4 mm bis 6 mm. Substratglas mit solchen Dicken bietet eine vorteilhafte mechanische Stabilität bei geringem Gewicht. Außerdem ist Substratglas mit solchen Dicken besonders gut thermisch vorspannbar.

Bevorzugt liegt die Dicke der Schutzschicht in einem Bereich von 20 nm bis 160 nm, weiter bevorzugt von 40 nm bis 145 nm, weiter bevorzugt von 47 nm bis 128 nm, weiter bevorzugt 77 nm bis 109 nm, weiter bevorzugt 80 nm bis 100 nm, weiter bevorzugt 85 nm bis 95 nm. Dadurch wird eine besonders gute Schutzfunktion erreicht. Bei zu dicken Schichten wird im Brandversuch keine Verlängerung der Standzeit erreicht. Im Gegenteil haben die im Rahmen der vorliegenden Erfindung durchgeführten Brandversuche überraschenderweise gezeigt, dass nicht nur eine Verringerung der Schichtdicke, sondern auch eine Erhöhung der Schichtdicke weg von den oben beschriebenen optimalen Bereichen, mit einer Verschlechterung der Brandschutzeigenschaften einhergeht, was sich in einer Erhöhung des Wärmeflusses und der Glastemperatur in Minute 120 zeigt.

Die Schichtdicke wird bevorzugt mit Hilfe von Ellipsometrischen Messungen oder REM (Rasterelektronenmikroskop) Messungen bestimmt.

Mit dem Brandschutzglas der Erfindung wird nach DIN EN 13501- 02: 2007 eine Feuerwiderstandsklasse von mehr als EW 60, bevorzugt mindestens EW 90, weiter bevorzugt mindestens EW 120 erreicht. Dies gilt insbesondere bei feuerseitiger Positionierung der Schutzschicht. Die Schutzschicht der vorliegenden Erfindung schützt die darunter liegende IR-reflektierende Schicht gegen einen vorzeitigen Schichtabbau bzw. eine vorzeitige Zersetzung im Lastfall (Brand/Temperatureinwirkung), so dass im Vergleich zum Stand der Technik erhöhte Feuerwiderstandsklassen erreicht werden.

Die vorliegende Erfindung betrifft auch ein Brandschutzsystem mit einem Brandschutzglas der Erfindung und einem Rahmen, in den das Brandschutzglas eingefasst ist. Bevorzugt weist das Brandschutzsystem eine Feuerwiderstandsklasse von mindestens EW 90, weiter bevorzugt mindestens EW 120 auf. Dies gilt insbesondere bei feuerseitiger Positionierung der Schutzschicht.

Die vorliegende Erfindung betrifft auch die Verwendung eines Brandschutzglases oder Brandschutzsystems der Erfindung als Architektur- oder Fahrzeugverglasung, insbesondere in Land-, Luft- oder Wasserfahrzeugen.

Die vorliegende Erfindung betrifft auch ein Verfahren zur Herstellung eines Brandschutzglases umfassend die folgenden Schritte:
a) Bereitstellen eines Substratglases,
b) Abscheiden einer IR-reflektierenden Schicht auf mindestens einer Seite des Glassubstrats,
c) Aufbringen mindestens einer Schutzschicht, bevorzugt genau einer Schutzschicht auf jeder der nach Schritt b) abgeschiedenen IR-reflektierenden Schichten.

Das Verfahren ist insbesondere ein Verfahren zur Herstellung eines erfindungsgemäßen Brandschutzglases.

Das Abscheiden der IR-reflektierenden Schicht gemäß Schritt b) kann auf genau einer Seite des Glassubstrats oder auf beiden Seiten des Glassubstrats erfolgen. Das Glassubstrat der Erfindung ist flach und kann auch als scheiben- oder plattenartig beschrieben werden. Die Längen- und Breitenausdehnung des Glassubstrats sind also deutlich größer als dessen Dicke. Die Oberfläche des Glassubstrats wird daher im Wesentlichen durch zwei gegenüberliegende Seiten bestimmt, deren Fläche durch Länge und Breite des Substrats definiert wird. Bei rundem Querschnitt lässt sich die Fläche der beiden Seiten des Glassubstrats über deren Radius bestimmen. Die im Vergleich zu den beiden Seiten deutlich kleineren Kantenflächen werden erfindungsgemäß nicht als Seiten bezeichnet. Das Glassubstrat weist daher genau zwei Seiten auf. Die Erfindung umfasst sowohl Ausführungsformen mit beschichteten Kantenflächen als auch Ausführungsformen ohne beschichtete Kantenflächen. Es ist auch möglich, dass einzelnen Kantenflächen ganz oder teilweise beschichtet werden, während andere Randflächen unbeschichtet bleiben. Besonders bevorzugt sind die Kantenflächen unbeschichtet. Dies ist insbesondere produktionsseitig von Vorteil. Denn sowohl beim Beschichten mit der IR-Schicht als auch beim Beschichten mit der Schutzschicht kann auf den beiden Seiten des Glassubstrats ein unbeschichteter Randbereich entstehen, bei der Schutzschicht auch "Tauchrand" genannt. Üblicherweise wird dieser Tauchrand im Rahmen der Nachverarbeitung abgetrennt und nur die beschichtete Fläche der Seiten des Glassubstrats wird genutzt. Die Seiten des Glassubstrats sind demnach bevorzugt über ihre gesamte Fläche beschichtet. Da die Tauchränder bevorzugt abgeschnitten werden und dies nach dem Beschichten erfolgt, ergeben sich in diesen bevorzugten Ausführungsformen unbeschichtete Kantenflächen.

In Ausführungsformen, in denen die IR-reflektierende Schicht nach Schritt b) nur auf eine der beiden Seiten des Glassubstrats abgeschieden wird, kann das Verfahren optional den Schritt c') umfassen, gemäß dem mindestens eine, bevorzugt genau eine Schutzschicht auf die der IR-reflektierenden Schicht gegenüberliegenden Seite des Glassubstrats aufgebracht (beschichtet) wird. Die Schritte c) und c') können insbesondere auch in einem gemeinsamen Verfahrensschritt, beispielsweise einem Tauchschritt durchgeführt werden.

Das Abscheiden der IR-reflektierenden Schicht erfolgt bevorzugt mit einem Sputterverfahren. Dieses ist preiswert und marktverfügbar.

Das Aufbringen der Schutzschicht erfolgt bevorzugt über eine Flüssigphasenbeschichtung, insbesondere in einem Sol-Gel-Verfahren, beispielsweise mit thermischer Verfestigung. Das Aufbringen der Schutzschicht kann aber auch über eine CVD-Beschichtung (Schichtauftrag durch plasmaunterstützte chemische Gasphasenabscheidung) erfolgen, beispielsweise mittels PECVD (plasmaunterstützte chemische Gasphasenabscheidung (englisch: "Plasma-Enhanced Chemical Vapour Deposition"), PICVD (englisch: "Plasma Impulse Chemical Vapour Deposition"), Niederdruck-CVD oder chemischer Gasphasenabscheidung bei Atmosphärendruck. Das Aufbringen der Schutzschicht kann aber auch über eine PVD-Beschichtung (Schichtauftrag durch plasmaunterstützte physikalische Gasphasenabscheidung) erfolgen, beispielsweise mittels Sputtern, thermischem Verdampfen, Laserstrahl-, Elektronenstrahl- oder Lichtbogenverdampfen. Das Aufbringen der Schutzschicht kann aber auch über eine Flammpyrolyse erfolgen.

Das Aufbringen (Beschichten) der Schutzschicht erfolgt ganz besonders bevorzugt mit einem Sol-Gel-Verfahren. Sol-Gel Schichten verhalten sich beim thermischen Vorspannen besonders stabil (rissfrei, defektfrei, etc.).

Besonders bevorzugt wird die Schutzschicht in einem Tauchschritt aufgebracht. Dabei liegt die Ziehgeschwindigkeit bevorzugt in einem Bereich von 50 mm/min bis 1500 mm/min, weiter bevorzugt von 75 mm/min bis 1000 mm/min, weiter bevorzugt von 100 mm/min bis 650 mm/min, weiter bevorzugt von 175 mm/min bis 450 mm/min, weiter bevorzugt von 200 mm/min bis 350 mm/min, weiter bevorzugt von 235 mm/min bis 300 mm/min. Die Ziehgeschwindigkeit gibt die Geschwindigkeit des Herausziehens aus dem Tauchbecken an.

Bevorzugt umfasst das Verfahren der vorliegenden Erfindung den folgenden zusätzlichen Schritt:
d) Vorspannen des nach den Schritten a) bis c) erhaltenen Brandschutzglases.

Es ist vorteilhaft, wenn das Glassubstrat vorgespannt ist, da dann die infolge der Aufheizung entstehenden Spannungen besser aufgenommen werden können. Dies ist nicht der Fall, wenn das Glassubstrat eine Glaskeramik ist. Die Vorspannung des Schichtverbundes ist produktionsseitig vorteilhaft, da dadurch eine Bandmaßfertigung möglich wird. Insbesondere kann im Bandmaß beschichtet, anschließend zurechtgeschnitten und dann vorgespannt werden.

Bevorzugt ist das Vorspannen gemäß Schritt d) ein thermisches Vorspannen. Erfindungsgemäß kann zu vollvorgespanntem Einscheiben-Sicherheitsglas (ESG) oder zu teilvorgespanntem Glas (TVG) vorgespannt werden. Das thermische Vorspannen beinhaltet den Schritt des Erhitzens des Glases auf eine Temperatur T1 und ein anschließendes schnelles Abkühlen des Glases. Die Höhe der Temperatur T1 liegt beim Vorspannen zum ESG bevorzugt in einem Bereich von 600°C bis 750°C, weiter bevorzugt von 630°C bis 730°C, weiter bevorzugt von 660°C bis 710°C, beispielsweise von 660°C bis 690°C oder von 680°C bis 710°C. Die Temperatur kann insbesondere in Abhängigkeit vom vorzuspannenden Glas variiert werden. Beim Vorspannen zum TVG sind dieselben Temperaturbereiche für T1 bevorzugt wie beim Vorspannen zum ESG. Beim Vorspannen zum TVG wird allerdings bevorzugt in der Niederdruckquench gekühlt.

### Figurenbeschreibung

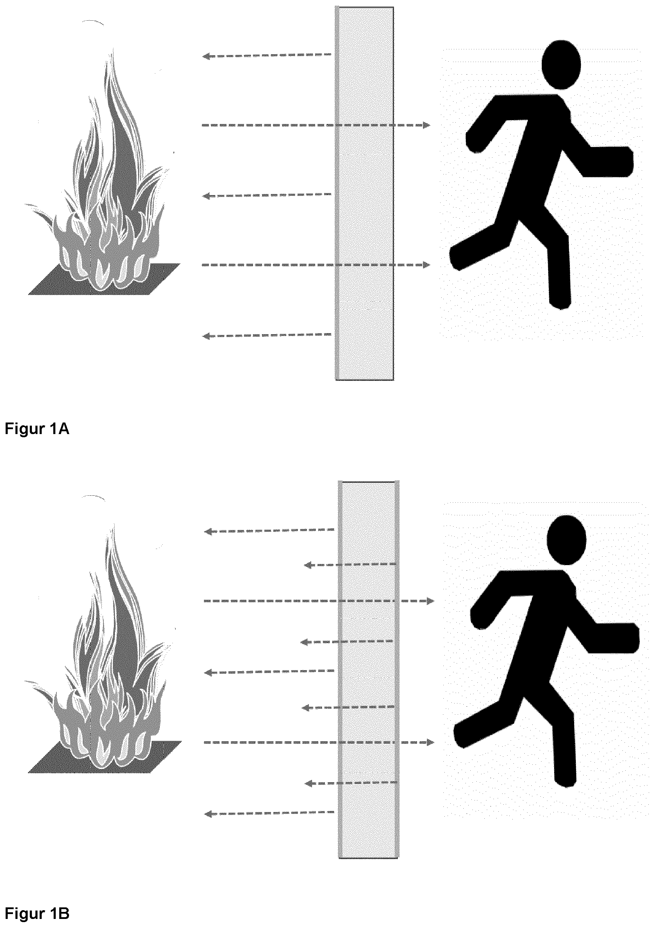

Figur 1 zeigt schematisch ein Brandschutzglas der vorliegenden Erfindung in Ausführung mit einseitiger Beschichtung (Figur 1A) oder mit beidseitiger Beschichtung (Figur 1B). Der Brand befindet sich links des Brandschutzglases. Rechts des Brandschutzglases ist eine Person dargestellt. Die Pfeile symbolisieren auf dem Brand basierende IR-Strahlung. Diese wird zu großen Anteilen von der IR-reflektierenden Schicht (Figur 1A) oder den IR-reflektierenden Schichten (Figur 1B) des Brandschutzglases reflektiert.

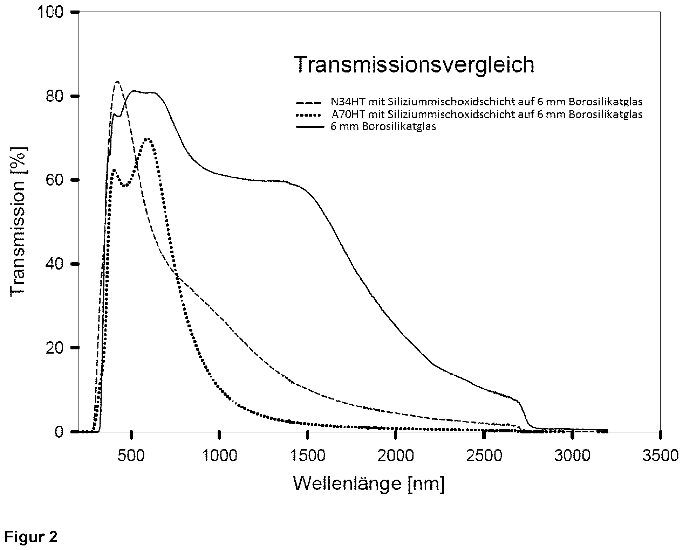

Figur 2 zeigt anhand dreier Transmissionsspektren den Einfluss der IR-reflektierenden Beschichtung auf die Transmission der Gläser. Das unbeschichtete Borosilikatglas hat eine hohe Transmission im IR-Bereich. Diese wird durch Beschichtung mit N34HT und noch deutlicher durch Beschichtung mit A70HT reduziert. Die mit A70HT beschichteten Gläser weisen jedoch im kurzwelligeren Bereich des sichtbaren Lichts eine niedrigere Transmission auf im Vergleich zu den mit N34HT beschichteten Gläsern. N34HT und A70HT sind IR-reflektierende Beschichtungen, die von der Firma arcon angeboten werden (arcon Flachglas-Veredlung GmbH & Co. KG, Industriestraße 10, 91555 Feuchtwangen, Deutschland). Als Borosilikatglas wurde jeweils BOROFLOAT^{®} 40 mit einer Dicke von 6 mm verwendet. Die gezeigten Kurven beziehen sich jeweils auf den vorgespannten Zustand.

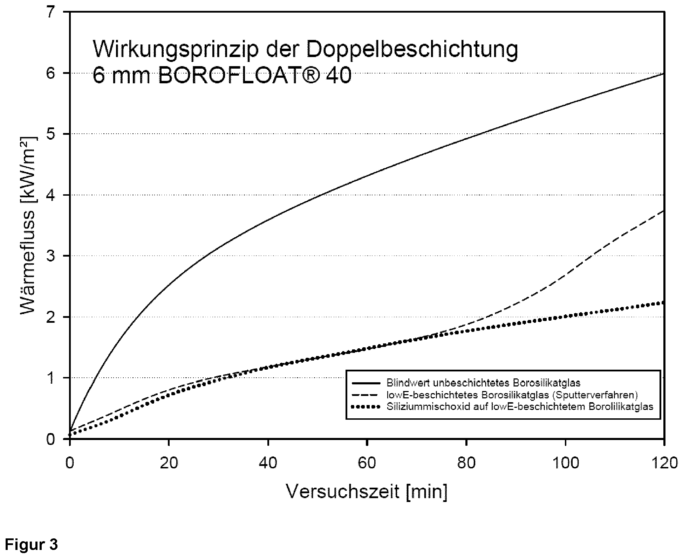

Figur 3 zeigt das Verhalten eines unbeschichteten Borosilikatglases, eines mit einer IR-reflektierenden Schicht beschichteten Borosilikatglases und eines mit einer IR-reflektierenden Schicht und einer darauf abgeschiedenen Siliziummischoxid-Schutzschicht (doppelt-)beschichteten Borosilikatglases in einem Brandversuch in Anlehnung an DIN EN 1363-1:2012/1364-1:2015. Sowohl das doppelt-beschichtete als auch das einfach-beschichtete Glas zeigen einen deutlich verringerten Wärmefluss im Vergleich zum unbeschichteten Glas. Nach 60 Minuten ist kein Unterschied zwischen dem doppelt-beschichteten und dem einfach-beschichteten Glas zu erkennen. Nach 120 Minuten ist jedoch der Wärmefluss bei dem doppelt-beschichteten Glas deutlich geringer als bei dem einfach-beschichteten Glas. Als Borosilikatglas wurde jeweils BOROFLOAT^{®} 40 mit einer Dicke von 6 mm verwendet.

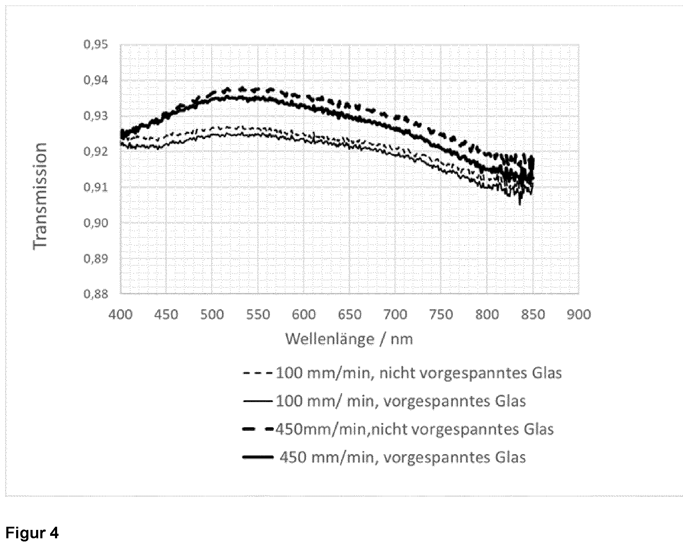

Figur 4 zeigt Transmissionskurven beidseitig beschichteter Gläser im Bereich des sichtbaren Lichts. Auf beiden Seiten des Glases wurde eine Siliziummischoxid-Schutzschicht aufgetragen. IR-reflektierende Schichten waren nicht vorhanden. Die Schutzschichten wurden mit 100 mm/min bzw. 450 mm/min gezogen. Bei der höheren Ziehgeschwindigkeit wurden im Vergleich zur langsameren Ziehgeschwindigkeit Gläser mit höherer Transmission erhalten. Die Ziehgeschwindigkeit korreliert mit der Schichtdicke, wobei mit höheren Ziehgeschwindigkeiten höhere Schichtdicken erhalten werden. Es ist außerdem ersichtlich, dass die Transmission durch das thermische Vorspannen reduziert wird. Dies ist vermutlich durch die mit dem Vorspannen verbundene Kompaktierung der Schutzschicht zu erklären. Als Borosilikatglas wurde jeweils BOROFLOAT^{®} 40 mit einer Dicke von 6 mm verwendet.

### Beispiele

### Beispiel 1: Thermisch vorgespanntes Borosilikatglas

Es wurde eine Borosilikatglasscheibe BOROFLOAT^{®} 40 mit den Abmessungen 500 x 500 x 6 mm³ bereitgestellt. Das Glas wurde thermisch zu ESG vorgespannt. Anschließend wurde ein Kleinbrandversuch in Anlehnung an DIN EN 1363-1:2012/1364-1:2015 durchgeführt.

Der Wärmefluss₁₂₀ betrug 6,15 kW/m² (Durchschnittswert). Der Ausdruck *"Wärmefluss₁₂₀"* beschreibt den Wärmefluss zu einem Zeitpunkt, an dem das Brandschutzglas dem Brand bereits für 120 Minuten ausgesetzt ist. Gemessen wurde der Wärmefluss mit einem für Werte <15 kW/m² ausgelegten Sensor (HEAT FLUX TRANSDUCERS (MEDTHERM 64 SERIES) der Firma MEDTHERM Corporation), der in einem Abstand von 1 m von der Glasscheibe auf der feuerabgewandten Seite positioniert war.

### Beispiel 2: LowE-Schicht (Sputterverfahren) auf thermisch vorgespanntem Borosilikatglas

Es wurde eine Borosilikatglasscheibe BOROFLOAT^{®} 40 mit den Abmessungen 500 x 500 x 6 mm³ bereitgestellt. Die Glasscheibe wurde in einem Sputterverfahren einseitig mit A70HT (arcon) beschichtet. Bei A70HT handelt es sich um eine IR-reflektierende lowE-Schicht. Dann wurde das beschichtete Glas thermisch zu ESG vorgespannt. Anschließend wurde ein Kleinbrandversuch in Anlehnung an DIN EN 1363-1:2012/1364-1:2015 durchgeführt, wobei der Schichtverbund so angeordnet wurde, dass die IR-reflektierende Schicht feuerseitig positioniert war.

Der Wärmefluss₁₂₀ wurde wie in Beispiel 1 bestimmt und betrug 6,2 kW/m². Die IR-reflektierende Beschichtung sorgte also für keine Verbesserung im Vergleich zu Beispiel 1. Der Grund ist, dass die lowE-Schicht nach 120 Minuten nahezu vollständig zersetzt war.

Ein abweichendes Ergebnis wird erhalten, wenn anstelle von A70HT eine Beschichtung mit N34HT (arcon) vorgenommen wird, wie aus Figur 3 ersichtlich wird. Der Wärmefluss₁₂₀ liegt dann bei etwa 3,8 kW/m² und liegt somit zwischen dem des unbeschichteten Glases und dem des erfindungsgemäßen doppelt-beschichteten Glases.

### Beispiel 3: LowE-Schicht (Sputterverfahren) und Coverschicht aus Siliziummischoxid auf thermisch vorgespanntem Borosilikatglas

Es wurde eine Borosilikatglasscheibe BOROFLOAT^{®} 40 mit den Abmessungen 500 x 500 x 6 mm³ bereitgestellt. Die Glasscheibe wurde einseitig mit N34HT (arcon) beschichtet. Bei N34HT handelt es sich um eine IR-reflektierende lowE-Schicht. Dann wurde auf die N34HT-Schicht eine Siliziummischoxidschicht mit einer Schichtdicke von 46 nm als Schutzschicht aufgebracht. Im Anschluss wurde das beschichtete Glas thermisch zu ESG vorgespannt. Anschließend wurde ein Kleinbrandversuch in Anlehnung an DIN EN 1363-1:2012/1364-1:2015 durchgeführt, wobei der Schichtverbund so angeordnet wurde, dass die Siliziummischoxidschicht feuerseitig positioniert war.

Der Wärmefluss₁₂₀ wurde wie in Beispiel 1 bestimmt und betrug 2,2 kW/m². Es wurde also eine deutliche Verbesserung im Vergleich zu den Beispielen 1 und 2 erzielt. Die Scheibe war auch nach 120 Minuten vollständig transparent. Die Beschichtung war also intakt.

### Beispiel 4: LowE-Schicht (Sputterverfahren) und Coverschicht aus Siliziummischoxid auf thermisch vorgespanntem Borosilikatglas

Es wurde eine Borosilikatglasscheibe BOROFLOAT^{®} 40 mit den Abmessungen 500 x 500 x 6 mm³ bereitgestellt. Die Glasscheibe wurde einseitig mit N34HT (arcon) beschichtet. Bei N34HT handelt es sich um eine IR-reflektierende lowE-Schicht. Dann wurde sowohl auf die N34HT-Schicht als auch auf die gegenüberliegende unbeschichtete Seite des Glassubstrats eine Siliziummischoxidschicht mit einer Schichtdicke von jeweils 46 nm aufgebracht, wobei die Ziehgeschwindigkeit 175 mm/min betrug. Im Anschluss wurde das beschichtete Glas thermisch zu ESG vorgespannt. Anschließend wurde ein Kleinbrandversuch in Anlehnung an DIN EN 1363-1:2012/1364-1:2015 durchgeführt, wobei die lowE-Schicht feuerseitig positioniert wurde.

Der Wärmefluss₁₂₀ wurde wie in Beispiel 1 bestimmt und betrug 2,5 kW/m². Es wurde also eine deutliche Verbesserung im Vergleich zu den Beispielen 1 und 2 erzielt. Die Scheibe war auch nach 120 Minuten vollständig transparent. Die Beschichtung war also intakt.

### Beispiel 5: Einfluss der Schichtdicke der Siliziummischoxidschicht

Einseitig mit N34HT als IR-reflektierender Schicht beschichtete Glassubstrate wurden einseitig oder beidseitig mit einer Siliziummischoxidschicht beschichtet, wie in den Beispielen 3 und 4 beschrieben. Dabei wurde jedoch die Dicke der Siliziummischoxidschicht variiert, um deren Einfluss auf das Brandschutzverhalten zu untersuchen. Die erhaltenen Ergebnisse sind in den beiden folgenden Tabellen zusammengefasst.

Die Tabelle 1 zeigt die Ergebnisse für eine einseitige Beschichtung mit Siliziummischoxidschicht wie in Beispiel 3 beschrieben. Für die Experimente wurde der Schichtverbund so angeordnet, dass die Siliziummischoxidschicht feuerseitig positioniert war.

**Tabelle 1: Kleinbrandversuch mit N34HT (arcon lowE-Schicht) und Siliziummischoxidschicht; 6 mm thermisch vorgespanntes Borosilikatglas, Scheibengröße 500 x 500 mm²; einseitige Beschichtung, Schicht feuerseitig**

| **Proben-Nr.** | **Schichtdicke [nm]** | **Ziehgeschwindigkeit** | **Wärmefluss [kW/m²]** | **Glastemperatur in Minute 120** |
|---|---|---|---|---|
| 1 | 128** | 650 mm/min | 3 | 671°C |
| 2 | 109** | 450 mm/min | 2,4 | 550°C |
| 3 | 88* | 250 mm/min | 2,3 | 538°C |
| 4 | 77* | 175 mm/min | 2,5 | 551°C |
| 5 | 47* | 100 mm/min | 2,7 | 610°C |

| | | | | |
|---|---|---|---|---|
| • *Ellipsometrische Messung, **REM Messung | | | | |

Die in Tabelle 1 angegebene Schichtdicke ist die Dicke der Siliziummischoxidschicht.

Als Probenpräparation für die REM-Messung wurden die Proben zerkleinert und mit einer 4,0 nm dicken Pt-Schicht besputtert. Die Querschnitte wurden mit REM beobachtet. Die angegebenen Schichtdicken der Proben-Nr. 1 und 2 wurden als Mittelwerte von vier unterschiedlichen Messstellen berechnet. Die Schichtdicken der Proben-Nr. 3 bis 5 wurden mit Hilfe von Ellipsometrischen Messungen ermittelt.

Es ist ersichtlich, dass die besten Ergebnisse für eine Schichtdicke im Bereich von 77 nm bis 109 nm erhalten werden. Bei dickeren Schichtdicken von 128 nm und bei dünneren Schichtdicken von 47 nm werden schlechtere Ergebnisse erhalten.

Die Tabelle 2 zeigt die Ergebnisse für eine beidseitige Beschichtung mit einer Siliziummischoxidschicht wie in Beispiel 4 beschrieben.

**Tabelle 2: Kleinbrandversuch mit N34HT (arcon lowE-Schicht) und Siliziummischoxidschicht; 6 mm thermisch vorgespanntes Borosilikatglas, Scheibengröße 500 x 500 mm²; beidseitige Beschichtung**

| **Schichtdicke [nm]** | **Ziehgeschwindigkeit** | **Wärmefluss [kW/m²]** | **Glastemperatur in Minute 120** |
|---|---|---|---|
| 77* | 175 mm/min | 2,54 | 649°C |
| 47* | 100 mm/min | 3,15 | 757°C |

| | | | |
|---|---|---|---|
| • *Ellipsometrische Messung | | | |

Die in Tabelle 2 angegebene Schichtdicke ist die Dicke der Siliziummischoxidschicht.

Die beidseitige Beschichtung ist zwar zu Beginn des Brandversuches infolge der stärkeren IR-Reflexion besser (die Schutzschicht ist auch zu einem geringeren Ausmaß IR-reflektierend), durch die mit höherer Glastemperatur einhergehende Degradation der Schicht zum Ende des Tests aber schlechter. Einseitige feuerseitige Beschichtung ist die günstigste Variante. Das Glas bleibt vergleichsweise kalt. Einseitige feuerabgewandte Beschichtung ist sehr ungünstig, die Glastemperatur steigt stark an und es kommt zu einer Degradation der Schicht. Das Schichtdickenoptimum der Siliziummischoxidschicht liegt im Bereich von 109 nm bis 77 nm.

### Beispiel 6: Abriebtest an Glasscheiben mit verschiedenen IR-reflektierenden Schichten

### a) Kurzbeschreibung

An zwei IR-beschichteten Scheiben wurde die Beschichtung auf Abrieb, gemäß DIN EN 1096, getestet. Eine der Scheiben war mit A70HT und die andere Scheibe mit N34HT beschichtet. Um eine Belastung der Schicht bei Reinigung zu testen, wurde zusätzlich ein Schrubbtest mit Schwammtuch und Sidolin gemacht.

### b) Probenpräparation

Die Proben wurden vor dem Schrubbtest mit entmineralisiertem Wasser und Kleenex-Tüchern gereinigt.

### c) Prüfverfahren

Bei beiden Proben wurde die unbeschichtete und beschichtete Seite getestet. Die Prüfeinrichtung war der Elcometer 1720 Washability Tester von Elcometer.

Die Proben wurden mit zwei verschiedenen Prüfverfahren getestet:

### aa) Abriebtest, angelehnt an DIN EN 1096

Abweichungen von der DIN bestehen in folgenden Punkten:
- Der Schrubbkopf dreht sich nicht während der Prüfung
- Das Schrubbmedium (Filz1) ist nur 7mm dick, die Dichte ist nicht bekannt.
- Der Druck ist mit 2,6 N/cm² etwas höher als in der DIN beschrieben (2,4N/cm²)

### bb) Zusätzlicher Abriebtest um die Belastung im Reinigungsfall zu testen

Hier wurde mit einem mit Sidolin getränkten Schwammtuch mit ähnlicher Belastung wie bei aa) bis zu 2000 Hübe geschrubbt. Dabei wurde nach 50, 100, 200, 500, 1000, 1500 und 2000 Hüben visuell die Schicht beurteilt und das Tuch neu mit Sidolin getränkt.

### d) Testparameter

### aa) Abriebtest, angelehnt an DIN EN 1096

### Schrubbmedium:

- Filz 1 trocken Dicke 7mm / ∅ 1,4cm (Zubehör von Elcometer)
- Filz 2 trocken Dicke 2mm / ∅ 1,4cm

Gesamtgewicht: 180g Eigengewicht des Schrubbkopfes + 225g Zusatzgewicht
Druck: 2,6 N/cm²
Hubzahl 50

Ein Hub bedeutet ein doppeltes Überfahren der Probenoberfläche (hin und zurück)

### bb) Zusätzlicher Abriebtest

### Schrubbmedium:

### Schwammtuch mit Sidolin getränkt (übliches Haushaltsschwammtuch)

Gesamtgewicht: 180 g Eigengewicht des Schrubbkopfes + 250 g Zusatzgewicht
Druck: 2,7 N/cm²
Hubzahl bis 2000

Ein Hub bedeutet ein doppeltes Überfahren der Probenoberfläche (hin und zurück)

### e) Einzelergebnisse

Auf Probe A70 HT konnte, aufgrund der Probengröße, nur zwei Schrubbspuren getätigt werden.

Auf Probe N34 HT wurden mit den beiden Schrubbmedien Filz 1 und 2 je zwei Spuren und mit dem Schwammtuch eine Spur geschrubbt.

Bei allen Testverfahren sind im Lichtkasten unter D65T-Licht bei beiden Gläsern keine Veränderungen sichtbar.

### Beispiel 7: Bestimmung der Schichthaftung mittels Scratchtest

Mittels eines Scratchtests wurde die Schichthaftung einer erfindungsgemäßen Schutzschicht auf einer erfindungsgemäßen IR-reflektierenden Schicht ermittelt. Sämtliche Proben waren Glasscheiben (entweder vorgespannt oder nicht vorgespannt) mit darauf abgeschiedener IR-reflektierender Schicht und darauf aufgebrachter Schutzschicht. Die erfindungsgemäße Schutzschicht bildete also die oberste Schicht. Als IR-reflektierende Schicht wurden entweder A70HT oder N34HT eingesetzt. Insgesamt ergaben sich somit die folgenden vier Gruppen von Probentypen:
A) Nicht vorgespanntes Glas, A70HT als IR-reflektierende Schicht
B) Vorgespanntes Glas, A70HT als IR-reflektierende Schicht
C) Nicht vorgespanntes Glas, N34HT als IR-reflektierende Schicht
D) Vorgespanntes Glas, N34HT als IR-reflektierende Schicht

Bei dem eingesetzten Prüfverfahren wird eine Ritzspur erzeugt, indem ein Indenter (Diamantkugel (R = 5 µm): Sphero-conical 5µm SC-A63) mit steigender Kraft (Fₙ) über die Oberfläche der zu prüfenden Probe gezogen wird. Die Prüfkraft war progressiv von 0 bis 0,4 N. Die Lastrate betrug 0,5 N/min. Die Geschwindigkeit war 10 mm/min. Als Prüfeinrichtung wurde der MCT MikroCombiTester von CSM MCT S/N 01-04488 verwendet.

Das Versagen der Schicht wurde durch Betrachten der Ritzspur unter dem Mikroskop ermittelt. Zusatzinformationen, wie Kräfte und Eindringtiefen wurden während des Scratchs gemessen und konnten mit den Mikroskopbildern verglichen werden.

Ausgewertet wurden folgende kritische Kräfte (Critical Loads Lc):
- Lc1a oberste Schicht ist in der Indenterspur entfernt
- Lc1b beide Schichten sind in der Indenterspur entfernt

Je Probentyp wurden zwei Proben getestet, außer bei Probentyp C), da hier nur eine Probe vorlag. Je Probe wurden zwei Scratchs im Kraftbereich 0,01 bis 0,4 N durchgeführt und daraus der Mittelwert und die Standardabweichung der kritischen Kräfte (Lc1a und Lc1b) ermittelt. Die Ergebnisse sind in folgender Tabelle zusammengefasst.

**Tabelle 3**

| **Probentyp** | | **Lc1a optisch [N]** | **Lc1b optisch [N]** |
|---|---|---|---|
| Probentyp A) | Mittelwert | 0,07 | 0,09 |
| | Standardabweichung | 0,01 | 0,01 |
| Probentyp B) | Mittelwert | 0,03 | |
| | Standardabweichung | 0,01 | |
| Probentyp C) | Mittelwert | 0,08 | |
| | Standardabweichung | 0,02 | |
| Probentyp D) | Mittelwert | 0,07 | |
| | Standardabweichung | 0,01 | |

Lediglich bei der Probentyp A) (A70HT, nicht vorgespannt) konnte eine Schichtablösung der obersten Schicht (Schutzschicht) getrennt von der darunter liegenden Schicht (IR-reflektierende Schicht) beobachtet werden. Bei allen anderen Probentypen (Probentypen B), C) und D)) lösten sich beide Schichten gleichzeitig in der Indenterspur von dem Substrat, was zeigt, dass zwischen Schutzschicht und IR-reflektierender Schicht eine bessere Haftung besteht als zwischen IR-reflektierender Schicht und Substrat. Daraus ergibt sich eine besonders hohe Stabilität des Schichtverbundes und damit einhergehend eine besonders hohe Sicherheit.

## Patentansprüche

1. Brandschutzglas umfassend einen Schichtverbund, der mindestens ein Glassubstrat, mindestens eine auf dem Glassubstrat abgeschiedene IR-reflektierende Schicht und jeweils mindestens eine auf der mindestens einen IR-reflektierenden Schicht aufgebrachte Schutzschicht umfasst, wobei mit dem Brandschutzglas nach DIN EN 13501- 02: 2007 eine Feuerwiderstandsklasse von mehr als EW60 erreicht wird, wobei jede der beiden Seiten des Brandschutzglases eine Fläche in einem Bereich von 0,0625 m² bis 10 m² aufweist und wobei die IR-reflektierende Schicht eine silberhaltige Schicht ist.

2. Brandschutzglas nach Anspruch 1, wobei der Schichtverbund genau ein Glassubstrat, insbesondere aus Glas oder Glaskeramik, umfasst.

3. Brandschutzglas nach mindestens einem der vorhergehenden Ansprüche, wobei der Schichtverbund jeweils genau eine, auf der mindestens einen IR-reflektierenden Schicht, aufgebrachte Schutzschicht umfasst.

4. Brandschutzglas nach mindestens einem der vorhergehenden Ansprüche, wobei das Brandschutzglas aus dem Schichtverbund besteht.

5. Brandschutzglas nach mindestens einem der vorhergehenden Ansprüche, wobei die Gesamtdicke des Brandschutzglases in einem Bereich von 1 bis 20 mm liegt.

6. Brandschutzglas nach mindestens einem der vorhergehenden Ansprüche, wobei die Dicke der Schutzschicht 20 nm bis 160 nm beträgt.

7. Brandschutzglas nach mindestens einem der vorhergehenden Ansprüche, wobei die Schutzschicht ein Siliziummischoxid umfasst.

8. Brandschutzglas nach mindestens einem der vorhergehenden Ansprüche, wobei die Schutzschicht ein Siliziummischoxid aus einem Siliziumoxid mit einem Mischungspartner umfasst, wobei der Mischungspartner ein Oxid und/oder Fluorid eines anderen Elements ist und das Molverhältnis des Elements des Mischungspartners zum Silizium im Mischoxid zwischen 3% und 30% beträgt.

9. Brandschutzglas nach mindestens einem der vorhergehenden Ansprüche, wobei die IR-reflektierende Schicht eine Sputterschicht ist.

10. Brandschutzglas nach mindestens einem der vorhergehenden Ansprüche, wobei das Glassubstrat einen thermischen Ausdehnungskoeffizienten (CTE) im Temperaturbereich von 20 bis 300°C von mindestens 2,0*10⁻⁶/K aufweist.

11. Brandschutzglas nach mindestens einem der vorhergehenden Ansprüche, wobei das Glassubstrat ausgewählt ist aus der Gruppe bestehend aus Borosilikatglas, Kalk-Natron-Glas, Aluminosilikatglas und Lithium-Aluminosilikatglas.

12. Brandschutzsystem mit einem Brandschutzglas nach mindestens einem der vorhergehenden Ansprüche und einem Rahmen, in den das Brandschutzglas eingefasst ist.

13. Verwendung eines Brandschutzglases oder Brandschutzsystems nach mindestens einem der vorhergehenden Ansprüche als Architektur- oder Fahrzeugverglasung, insbesondere in Land-, Luft- oder Wasserfahrzeugen.

14. Verfahren zur Herstellung eines Brandschutzglases nach mindestens einem der Ansprüche 1 bis 11 umfassend die folgenden Schritte:
a) Bereitstellen eines Substratglases,
b) Abscheiden einer IR-reflektierenden Schicht auf mindestens einer Seite des Glassubstrats,
c) Aufbringen mindestens einer Schutzschicht auf jeder der nach Schritt b) abgeschiedenen IR-reflektierenden Schichten.

## Claims

1. A fire resistant glass comprising a layer composite, which comprises at least one glass substrate, at least one IR-reflecting layer being deposited on the glass substrate and at least one protective layer each being applied onto the at least one IR-reflecting layer, wherein with the fire resistant glass according to DIN EN 13501- 02: 2007 a fire-resistance rating of higher than EW 60 is achieved, wherein each of both sides of the fire resistant glass has a surface area in a range of 0.0625 m² to 10 m² and wherein the IR-reflecting layer is a layer containing silver.

2. The fire resistant glass according to claim 1, wherein the layer composite comprises exactly one glass substrate, in particularly made of glass or glass ceramic.

3. The fire resistant glass according to at least one of the preceding claims, wherein the layer composite each comprises exactly one protective layer being applied onto the at least one IR-reflecting layer.

4. The fire resistant glass according to at least one of the preceding claims, wherein the fire resistant glass consists of said layer composite.

5. The fire resistant glass according to at least one of the preceding claims, wherein the total thickness of the fire resistant glass is in a range of 1 to 20 mm.

6. The fire resistant glass according to at least one of the preceding claims, wherein the thickness of the protective layer is 20 nm to 160 nm.

7. The fire resistant glass according to at least one of the preceding claims, wherein the protective layer comprises a mixed oxide of silicon.

8. The fire resistant glass according to at least one of the preceding claims, wherein the protective layer comprises a mixed oxide of silicon made of a silicon oxide with a mixing partner, wherein the mixing partner is an oxide and/or fluoride of another element and the molar ratio of the element of the mixing partner to the silicon in the mixed oxide is between 3 % and 30 %.

9. The fire resistant glass according to at least one of the preceding claims, wherein the IR-reflecting layer is a sputter layer.

10. The fire resistant glass according to at least one of the preceding claims, wherein the glass substrate has a coefficient of thermal expansion (CTE) in the temperature range of 20 to 300°C of at least 2.0*10⁻⁶/K.

11. The fire resistant glass according to at least one of the preceding claims, wherein the glass substrate is selected from the group consisting of borosilicate glass, soda-lime glass, aluminosilicate glass, and lithium aluminosilicate glass.

12. A fire resistant system with a fire resistant glass according to at least one of the preceding claims and a frame, in which the fire resistant glass is enclosed.

13. A use of a fire resistant glass or fire resistant system according to at least one of the preceding claims as architectural or vehicle glazing, in particularly in land, air, or water vehicles.

14. A method for the production of a fire resistant glass according to at least one of claims 1 to 11 comprising the following steps:
a) providing of a substrate glass,
b) depositing of an IR-reflecting layer on at least one side of the glass substrate,
c) applying of at least one protective layer onto each of the IR-reflecting layers being deposited according to step b).

## Revendications

1. Verre coupe-feu comprenant un ensemble de couches composite qui comprend au moins un substrat en verre, au moins une couche réfléchissant les IR déposée sur le substrat en verre et au moins une couche de protection appliquée sur l'au moins une couche réfléchissant les IR, le verre coupe-feu permettant selon DIN EN 13501-02 : 2007 d'atteindre une classe de résistance au feu supérieure à EW 60, chacune des deux faces du verre coupe-feu ayant une surface dans la gamme allant de 0,0625 m² à 10 m² et dans lequel la couche réfléchissant les IR est une couche contenant de l'argent.

2. Verre coupe-feu selon la revendication 1, dans lequel l'ensemble de couches composite comprend exactement un substrat en verre, notamment en verre ou en vitrocéramique.

3. Verre coupe-feu selon l'une au moins des revendications précédentes, dans lequel l'ensemble de couches composite comprend exactement une couche de protection appliquée sur l'au moins une couche réfléchissant les IR.

4. Verre coupe-feu selon l'une au moins des revendications précédentes, dans lequel le verre coupe-feu est constitué de l'ensemble de couches composite.

5. Verre coupe-feu selon l'une au moins des revendications précédentes, dans lequel l'épaisseur totale du verre coupe-feu est dans une gamme allant de 1 à 20 mm.

6. Verre coupe-feu selon l'une au moins des revendications précédentes, dans lequel l'épaisseur de la couche de protection est de 20 nm à 160 nm.

7. Verre coupe-feu selon l'une au moins des revendications précédentes, dans lequel la couche de protection comprenant un oxyde mixte de silicium.

8. Verre coupe-feu selon l'une au moins des revendications précédentes, dans lequel la couche de protection comprend un oxyde mixte de silicium constitué d'un oxyde de silicium avec un partenaire de mélange, le partenaire de mélange étant un oxyde et/ou un fluorure d'un autre élément et le rapport molaire de l'élément du partenaire de mélange au silicium dans l'oxyde mixte étant compris entre 3 % et 30 %.

9. Verre coupe-feu selon l'une au moins des revendications précédentes, dans lequel la couche réfléchissant les IR est une couche pulvérisée.

10. Verre coupe-feu selon l'une au moins des revendications précédentes, dans lequel le substrat en verre a un coefficient de dilatation thermique (CTE) d'au moins 2,0*10⁻⁶/K dans la gamme de température allant de 20 à 300°C.

11. Verre coupe-feu selon l'une au moins des revendications précédentes, dans lequel le substrat en verre est choisi dans le groupe constitué par le verre borosilicaté, le verre sodé calcique, le verre aluminosilicate et le verre aluminosilicate de lithium.

12. Système coupe-feu comprenant un verre coupe-feu selon l'une au moins des revendications précédentes et un cadre dans lequel le verre coupe-feu est enchâssé.

13. Utilisation d'un verre coupe-feu ou d'un système coupe-feu selon l'une au moins des revendications précédentes comme vitrage architectural ou de véhicule, notamment dans les engins terrestres, aériens ou nautiques.

14. Procédé de fabrication d'un verre coupe-feu selon l'une au moins des revendications 1 à 11, comprenant les étapes suivantes :
a) fournir un substrat en verre,
b) déposer une couche réfléchissant les IR sur au moins une face du substrat en verre,
c) appliquer au moins une couche de protection sur chacune des couches réfléchissant les IR déposées suivant l'étape b).
